# EUROPÄISCHE PATENTSCHRIFT

(11) **EP 2 649 820 B1**
(45) Veröffentlichungstag und Bekanntmachung des Hinweises auf die Patenterteilung: **12.11.2014**
(21) Anmeldenummer: 11764683.6
(22) Anmeldetag: 29.09.2011
(51) Int. Cl.: H04W 8/00, H04W 84/18

(54) **VERFAHREN ZUR DRAHTLOSEN KOMMUNIKATION ZWISCHEN EINEM KRAFTFAHRZEUG UND WENIGSTENS EINEM ANDEREN KOMMUNIKATIONSTEILNEHMER UND KRAFTFAHRZEUG**
METHOD FOR WIRELESS COMMUNICATION BETWEEN A VEHICLE AND AT LEAST ONE OTHER COMMUNICATION PARTNER AND VEHICLE
PROCÉDE POUR COMMUNICATION SANS FIL ENTRE UN VEHICULE ET AU MOIN UN AUTRE PARTICIPANT DE COMMUNICATION ET VEHICULE

(30) Priorität: 10.12.2010 DE 102010054087
(43) Veröffentlichungstag der Anmeldung: 16.10.2013
(73) Patentinhaber: Audi AG, 85045 Ingolstadt (DE)
(72) Erfinder: JELINEK, Karl, 85092 Kösching (DE)
(74) Vertreter: Brandt, Kai
(86) Internationale Anmeldenummer: PCT/EP2011/004856
(87) Internationale Veröffentlichungsnummer: WO 2012/076067

(56) Entgegenhaltungen:
- DE-A1-102008 007 711
- US-A1- 2008 031 208
- US-A1- 2010 178 872

## Beschreibung

Die Erfindung betrifft ein Verfahren zur drahtlosen Kommunikation zwischen einem Kraftfahrzeug und wenigstens einem anderen Kommunikationsteilnehmer, insbesondere einem weiteren Kraftfahrzeug und/oder einem stationären Kommunikationsteilnehmer. Daneben betrifft die Erfindung ein Kraftfahrzeug.

Um den Informationsaustausch mit anderen Verkehrsteilnehmern oder auch stationären Objekten während des Betriebs eines Kraftfahrzeugs zu ermöglichen, wurden so genannte "Car-to-X"-Systeme vorgeschlagen, also funkbasierte Kommunikationssysteme, über die das Kraftfahrzeug mit anderen Kommunikationsteilnehmern, insbesondere weiteren Kraftfahrzeugen und/oder stationären Kommunikationsteilnehmern, kommunizieren kann. Dabei ist es heutzutage bekannt, dass in den entsprechend ausgestatteten Kraftfahrzeugen Kommunikationseinrichtungen vorgesehen sind, die ständig nach möglichen anderen Kommunikationspartnern, beispielsweise Fahrzeugen, Verkehrsanlagen, Tankstellen, Ampeln und dergleichen, außerhalb des Kraftfahrzeuges suchen. Ziel ist es, eine Datenverbindung mit einer kompatiblen Kommunikationseinrichtung aufzubauen. Dabei werden verschiedene Frequenzbänder im Scan-Verfahren kontinuierlich überprüft. Um so früh wie möglich potentielle Kommunikationspartner zu erkennen, muss die Reichweite und somit die Ausgangsleistung der Funkantennen sehr hoch sein.

Diese kontinuierlich hohen Funkleistungen haben eine erhöhten Verbrauch des elektrischen Bordnetzes im Kraftfahrzeug zur Folge. Dies führt bei aktuellen Kraftfahrzeugen mit Verbrennungsmaschinen zu einem zwangsläufig erhöhten Kraftstoffverbrauch, bei elektrisch betriebenen Kraftfahrzeugen resultiert dies in einer Reduzierung der möglichen Fahrreichweite.

US 2010/178872 A1 offenbart eine Kurzreichweitenkommunikation zwischen zwei vorbestimmten Kommunikationspartnern, die von vorneherein und unveränderbar festgelegt sind, nämlich dem Fahrzeug und dem Zugangspunkt. Wenn das Fahrzeug langsame Fahrt und eine Position nahe der Heimadresse feststellt sendet es eine Anfrage aus in der eine Fahrzeugidentifikation enthalten ist. soll. Die Anfrage stellt gezielte Kommunikation mit dem Zugangspunkt dar, um festzustellen ob der eine, bestimmte und vorbekannte Kommunikationspartner vorhanden ist und antworten wird.

Die meisten Verfahren zur Erkennung eines zum Informationsaustausch geeigneten Kommunikationsteilnehmers basieren hierbei auf dem Frage-Antwort-Verfahren, welches das wiederholte Senden auf den unterschiedlichen Frequenzen bzw. Frequenzbändern erfordert, welches wiederum für den erhöhten Energieverbrauch sorgt.

Der Erfindung liegt daher die Aufgabe zugrunde, eine Möglichkeit zum Auffinden von Kommunikationspartnern anzugeben, die mit einem geringeren Energieverbrauch auskommt.

Zur Lösung dieser Aufgabe ist bei einem Verfahren der eingangs genannten Art erfindungsgemäß vorgesehen, dass eine vorbestimmte Sendefrequenz verwendet wird, über die das Kraftfahrzeug und/oder der Kommunikationsteilnehmer zyklisch zwischen Sendepausen ein kommunikationsteilnehmerspezifisches Identifikationssignal aussenden.

Die Erfindung schlägt mithin vor, Identifikationssignale als Funksignale zu verwenden, die auf einer festen Sendefrequenz ausgesendet werden. Dabei kann vorgesehen sein, dass das Identifikationssignal durch ein Identifikationsmuster der vom Kraftfahrzeug genutzten funkbasierten Kommunikationseinrichtung realisiert ist, wobei jeder funkbasierten Kommunikationseinrichtung ein eindeutiges, für diese Kommunikationseinrichtung (und somit den sendenden Kommunikationsteilnehmer) spezifisches Identifikationssignal vergeben wird. Durch Auswertung empfangener Identifikationssignale können mögliche Kommunikationspartner eindeutig und frühzeitig erkannt werden, wobei zusätzlich durch den Puls-Pausen-Betrieb die elektrische Leistungsaufnahme während der "Suche" nach neuen Verbindungen reduziert wird. Es muss also nicht ständig mit voller Sendeleistung nach kompatiblen Funkpartnern gesucht werden, sondern es kann elektrische Energie im Kraftfahrzeug eingespart werden.

Besonders vorteilhaft ist das erfindungsgemäße Verfahren dann, wenn eine Sendepause verwendet wird, die länger als die Sendezeit für das Identifikationssignal ist. Beispielsweise kann vorgesehen sein, dass eine Sendepause im Sekundenbereich verwendet wird, beispielsweise 5 Sekunden, wobei die Sendezeit für das Identifikationssignal kleiner als eine Sekunde ist, beispielsweise im Bereich von 100 ms oder 100 µs liegt. Während der Sendepause, idealerweise ständig, wird gleichzeitig die Sendefrequenz auf Identifikationssignale anderer Kommunikationsteilnehmer überwacht, die dann ausgewertet werden können. Je kleiner das Verhältnis zwischen Sendezeit und Sendepause ist, desto niedriger ist die Wahrscheinlichkeit, dass im Sendebereich Identifikationssignale überlappen, sodass beispielsweise keine Filteranordnung oder dergleichen zur Trennung verschiedener Identifikationssignale benötigt wird.

In vorteilhafter weiterer Ausgestaltung kann vorgesehen sein, dass in das Identifikationssignal wenigstens eine Information codiert wird, insbesondere die Art des Kommunikationsteilnehmers und/oder ein Typ des Kommunikationsteilnehmers und/oder eine Erreichbarkeit bezüglich einer gezielten Kommunikation mit dem Kommunikationsteilnehmer und/oder ein Status des Kommunikationsteilnehmers. Insbesondere kann ein definiertes Funkprotokoll verwendet werden, über das die Identifikationssignale auf der Sendefrequenz nach Empfang durch alle Kommunikationsteilnehmer ausgewertet werden können. So ist es einfach möglich, aufgrund bestimmter Bedingungen Kommunikationspartner auszuwählen, mit denen dann ein tatsächlicher Datenaustausch vorgenommen wird. Über die Art des Senders können beispielsweise mobile und stationäre Kommunikationsteilnehmer unterschieden werden, insbesondere auch feiner aufgelöst, beispielsweise nach Art des Verkehrsteilnehmers und/oder Art des stationären Kommunikationsteilnehmers. Ein Typ des Senders kann bei einem Kraftfahrzeug beispielsweise ein Hersteller und eine Angabe zum Modell sein, wobei eine Erreichbarkeitsinformation bezüglich einer gezielten Kommunikation mit dem Sender eine Angabe zu Kommunikationsfrequenzen und dort verwendeten Protokollen umfassen kann. Ein Status des Senders kann beispielsweise Informationen über die Aktivität des Kommunikationsteilnehmers und dergleichen geben.

Wie bereits erwähnt, kann vorgesehen sein, dass wenigstens ein Identifikationssignal von dem Kraftfahrzeug empfangen und ausgewertet wird, insbesondere hinsichtlich einer möglichen gezielten Kommunikation mit dem das Identifizierungssignal aussendenden Kommunikationsteilnehmer. Es kann insbesondere vorgesehen sein, dass wenigstens während der gesamten Sendepause die vorbestimmte Sendefrequenz auf Identifikationssignale anderer Kommunikationsteilnehmer hin überwacht wird. Überlappende Identifikationssignale zweier verschiedener Kommunikationsteilnehmer können beispielsweise anhand von Filtern aufgelöst werden.

Ist ein Kommunikationspartner gefunden, so kann vorgesehen sein, dass eine gezielte Kommunikation mit einem Kommunikationsteilnehmer auf einer von der Sendefrequenz unterschiedlichen Frequenz erfolgt. Das bedeutet, die vorbestimmte Sendefrequenz wird letztlich freigehalten für den Identifikations- und Suchbetrieb, sodass die Kommunikation zwischen Kommunikationsteilnehmern die ldentifikationssignale nicht stören kann. Insbesondere kann die Frequenz, auf der die Kommunikation stattfindet, aus einer in den Identifikationssignalen enthaltenden Information über eine Erreichbarkeit bezüglich einer gezielten Kommunikation mit dem Kommunikationsteilnehmer ermittelt werden.

Vorzugsweise kann ferner vorgesehen sein, dass eine erweiterte gezielte Kommunikation mit einem als den gleichen Hersteller und/oder den gleichen Typ aufweisend identifizierten Kommunikationsteilnehmer erfolgt. Das erfindungsgemäße Verfahren ermöglicht also auch eine Art "Freund"-Erkennung (insbesondere eine OEM-Erkennung), sodass bei spezieller Übereinstimmung von über das Identifikationssignal übertragenen Informationen ein erweiterter Datenaustausch stattfinden kann, beispielsweise zusätzliche Informationen von dem Kommunikationsteilnehmer abgefragt werden können und/oder weitere Funktionen genutzt werden können.

Als Sendereichweite für das Identifikationssignal können 10 bis 30 Meter, insbesondere 20 Meter, verwendet werden. Eine solche, eher geringe Kommunikationsreichweite reduziert weiterhin das Risiko überlappender Identifikationssignale und ist insbesondere in Kommunikationssystemen anwendbar, bei denen ein Informationsaustausch im Zweifel auch über mehrere Kommunikationsteilnehmer erfolgen kann, mithin zumindest ein Teil der Kommunikationsteilnehmer als Router ausgebildet sind. So kann beispielsweise in einem Stau eine Information vom Beginn des Staus zum Ende des Staus über mehrere Kommunikationsteilnehmer, insbesondere Kraftfahrzeuge, transportiert werden, die sich jeweils gegenseitig anhand des Identifikationssignals erkennen können.

Neben dem Verfahren betrifft die Erfindung auch ein Kraftfahrzeug, umfassend eine zur Durchführung des erfindungsgemäßen Verfahrens ausgebildete Kommunikationseinrichtung. Das bedeutet, die Kommunikationseinrichtung des Kraftfahrzeug weist entsprechende Software- und Hardwarekomponenten auf, die es zum einen ermöglichen, auf der vorbestimmten Sendefrequenz das Identifikationssignal auszusenden und zum anderen, Identifikationssignale anderer Kommunikationsteilnehmer zu empfangen und bezüglich einer möglichen gezielten Kommunikation auszuwerten.

Durch eine entsprechende Ausgestaltung von Kraftfahrzeugen und sonstigen Kommunikationsteilnehmern, die allesamt eine zur Durchführung des erfindungsgemäßen Verfahrens ausgebildete Kommunikationseinrichtung aufweisen, kann ein Kommunikationssystem geschaffen werden, welches mit geringem Energieverbrauch insgesamt betrieben werden kann und dennoch ein Auffinden geeigneter Kommunikationspartner unter den Kommunikationsteilnehmern erlaubt.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: das erfindungsgemäße Kraftfahrzeug als Teilnehmer eines Kommunikationssystems, und
- Fig. 3: ein zeitlicher Ablaufplan der Abfolge verschiedener Identifikationssignale.

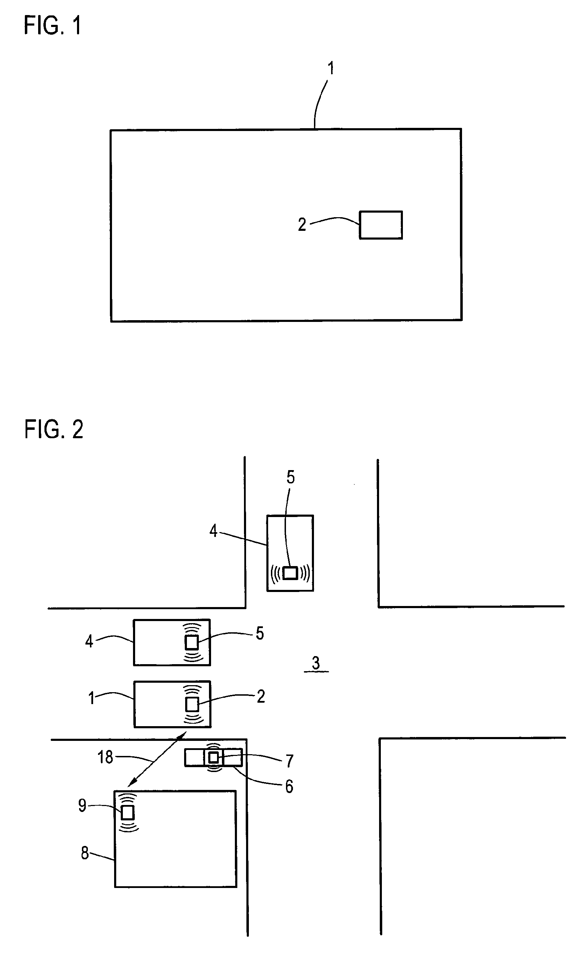

Fig. 1 zeigt ein erfindungsgemäßes Kraftfahrzeug 1 in einer Prinzipskizze. In dem erfindungsgemäßen Kraftfahrzeug 1 ist eine Kommunikationseinrichtung 2 verbaut. Diese weist nun zwei Grundfunktionalitäten auf. Zum einen sendet sie im Puls-Pausen-Betrieb zyklisch ein Identifikationssignal aus, das spezifisch für die Kommunikationseinrichtung 2 und mithin für das Kraftfahrzeug 1 ist. Dieses Identifikationssignal wird auf einer vorbestimmten Sendefrequenz gesendet. Zugleich ist die Kommunikationseinrichtung 2 ausgebildet, diese Sendefrequenz zumindest in den Sendepausen zu überwachen, um die Identifikationssignale anderer Kommunikationsteilnehmer zu empfangen und auszuwerten, insbesondere, um festzustellen, ob eine gezielte Kommunikation mit dem dem Identifikationssignal zugehörigen Kommunikationsteilnehmer sinnvoll ist.

Hierzu ist das Identifikationssignal, beispielsweise nach Art eines bestimmten Protokolls, so gestaltet, dass es verschiedene Informationen enthält, die die Art des Kommunikationsteilnehmers, also ob es sich um einen Verkehrsteilnehmer, und wenn ja, was für einen Verkehrsteilnehmer, oder einen stationären Kommunikationsteilnehmer, beispielsweise eine Ampel, eine Tankstelle oder dergleichen, handelt. Zudem wird der Typ des Kommunikationsteilnehmers im Informationssignal codiert, also bei einem Kraftfahrzeug beispielsweise Hersteller und Modell. Schließlich enthält das Identifikationssignal noch einen Status und eine Information zur Erreichbarkeit bezüglich einer gezielten Kommunikation mit dem Kommunikationsteilnehmer.

Aufgrund dieser Informationen, die durch Auswertung aus dem Identifikationssignal gewonnen werden können, kann letztlich gefolgert werden, ob eine gezielte Kommunikation mit dem das Identifizierungssignal aussendenden Kommunikationsteilnehmer lohnt.

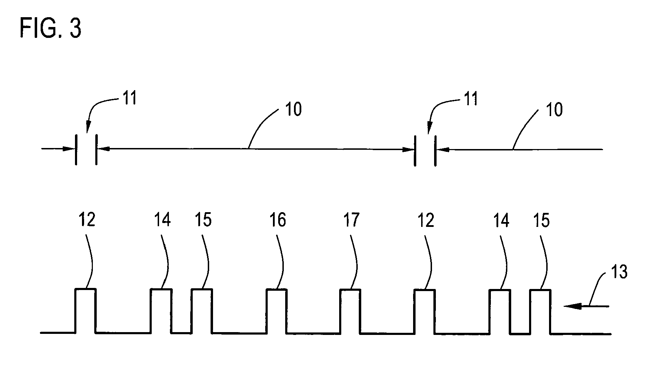

Ein das erfindungsgemäße Kraftfahrzeug 1 als Kommunikationsteilnehmers enthaltendes Kommunikationssystem illustriert Fig. 2, in der das Kraftfahrzeug 1 mit der Kommunikationseinrichtung 2 an einer Kreuzung 3 gezeigt ist. Wie angedeutet, sendet es dabei regelmäßig sein Identifikationssignal aus. Als weitere Kommunikationsteilnehmer sind zwei weitere Kraftfahrzeuge 4 mit Kommunikationseinrichtungen 5 sowie zwei stationäre Kommunikationsteilnehmer, nämlich eine Ampel 6 mit einer Kommunikationseinrichtung 7 und eine Tankstelle 8 mit einer Kommunikationseinrichtung 9 gezeigt. Auch die weiteren Kommunikationseinrichtungen 5, 7 und 9 senden regelmäßig im Puls-Pausen-Betrieb ihr Identifikationssignal auf der vorbestimmten Sendefrequenz, was durch Fig. 3 näher erläutert werden soll.

Dort ist im oberen Bereich die Aktivität der Kommunikationseinrichtung 2 des Kraftfahrzeugs 1 näher gezeigt. Zwischen Sendepausen 10 liegen die Sendezeiten 11, in denen das Identifikationssignal 12 des Kraftfahrzeugs 1 gesendet wird. Ersichtlich sind die Sendepausen 10 weitaus länger als die Sendezeit 11, wobei die Sendepause 10 beispielsweise 5 Sekunden lang sein kann, die Sendezeit 11 beispielsweise 100 µs. Ersichtlich sind auf der im unteren Bereich schematisch dargestellten Sendefrequenz 13 neben den Identifikationssignalen 12 des Kraftfahrzeugs 1 noch weitere Identifikationssignale 14 bis 17 vorhanden, die von den anderen Kommunikationsteilnehmern 4, 6, und 8 ausgesendet werden. Entsprechend werden sie vom Kraftfahrzeug 1 bzw. der Kommunikationseinrichtung 2 auch empfangen und können dort ausgewertet werden. Aufgrund der in den Identifikationssignalen 14 bis 17 enthaltenden Informationen kann das Kraftfahrzeug 1 entscheiden, ob es eine gezielte Kommunikation mit einem der anderen Kommunikationsteilnehmer 4, 6 oder 8 aufbauen möchte. Entsprechend werten natürlich die Kommunikationseinrichtungen 5, 7 und 9 ebenso die nicht von ihnen selbst ausgesandten Identifikationssignale aus, darunter auch das Identifikationssignal 12 des Kraftfahrzeugs 1. Auch sie können gegebenenfalls gezielte Kommunikationsverbindungen mit anderen Kommunikationsteilnehmern, beispielsweise dem Kraftfahrzeug 1, aufbauen.

Im vorliegenden Fall möchte das Kraftfahrzeug 1 gerne eine gezielte Kommunikationsverbindung 18 (Fig. 2) mit der Tankstelle 8, mithin der Kommunikationseinrichtung 9, aufbauen. Hierzu nutzt es die in dem Identifikationssignal 17 für die Tankstelle 8 enthaltenen Informationen über die Erreichbarkeit der Tankstelle 8, sodass die gezielte Kommunikation 18 mit der Tankstelle 8 auf einer von der Sendefrequenz unterschiedlichen Frequenz erfolgt.

Es sei an dieser Stelle noch angemerkt, dass über die in den Identifikationssignalen 12, 14 bis 17, enthaltenen Informationen und die Auswertung auch Kommunikationsteilnehmer bestimmt werden können, die eine erweiterte Kommunikation, letztlich also einen erweiterten Datenaustausch, ermöglichen, also eine so genannte "Freund-Erkennung". Beispielsweise können Kraftfahrzeuge 1, 4, des gleichen Herstellers zusätzliche Informationen übertragen bzw. es können zusätzliche Funktionalitäten im beschriebenen "Carto-X-Kommunikationssystem" genutzt werden.

## Patentansprüche

1. Verfahren zur drahtlosen Kommunikation zwischen einem Kraftfahrzeug (1, 4) und mehreren anderen Kommunikationsteilnehmern (4, 1, 6, 8), insbesondere einem weiteren Kraftfahrzeug (1, 4) und/oder einem stationären Kommunikationsteilnehmer (6, 8),
**dadurch gekennzeichnet,**
**dass** eine vorbestimmte Sendefrequenz (13) verwendet wird, über die das Kraftfahrzeug (1, 4) und/oder die Kommunikationsteilnehmer (4, 1, 6, 8) zyklisch zwischen Sendepausen (10) ein kommunikationsteilnehmerspezifisches Identifikationssignal, in das wenigstens eine Information codiert wird, (12, 14-17) aussenden, wobei wenigstens ein Identifikationssignal (12, 14-17) von dem Kraftfahrzeug (1, 4) empfangen und zum Auffinden geeigneter Kommunikationspartner unter den mehreren Kommunikationsteilnehmern hinsichtlich einer möglichen gezielten Kommunikation (18) mit dem das Identifikationssignal (12, 14-17) aussendenden Kommunikationsteilnehmer (4, 1, 6, 8) unter Berücksichtigung der Information ausgewertet wird, wobei eine gezielte Kommunikation (18) mit einem Kommunikationsteilnehmer (1, 4, 6, 8) auf einer von der Sendefrequenz (13) unterschiedlichen Frequenz erfolgt.

2. Verfahren nach Anspruch 1,
**dadurch gekennzeichnet,**
**dass** eine Sendepause (10) verwendet wird, die länger als die Sendezeit (11) für das Identifikationssignal (12, 14-17) ist.

3. Verfahren nach Anspruch 1 oder 2,
**dadurch gekennzeichnet,**
**dass** in das Identifikationssignal (12, 14-17) als Information die Art des Kommunikationsteilnehmers (1, 4, 6, 8) und/oder einen Typ des Kommunikationsteilnehmers (1, 4, 6, 8) und/oder eine Erreichbarkeit bezüglich einer gezielten Kommunikation mit dem Kommunikationsteilnehmer (1, 4, 6, 8) und/oder einen Status des Kommunikationsteilnehmers (1, 4, 6, 8) codiert wird.

4. Verfahren nach einem der vorangehenden Ansprüche,
**dadurch gekennzeichnet,**
**dass** eine erweiterte gezielte Kommunikation mit einem als den gleichen Hersteller und/oder den gleichen Typ aufweisend identifizierten Kommunikationsteilnehmer (1, 4, 16, 8) erfolgt.

5. Verfahren nach einem der vorangehenden Ansprüche,
**dadurch gekennzeichnet,**
**dass** als Sendereichweite für das Identifikationssignal (12, 14-17) 10 bis 30 Meter, insbesondere 20 Meter, verwendet wird.

6. Kraftfahrzeug (1, 4), umfassend eine zur Durchführung eines Verfahrens nach einem der vorangehenden Ansprüche ausgebildete Kommunikationseinrichtung (2, 5).

## Claims

1. Method for wireless communication between a motor vehicle (1, 4) and a plurality of other communication participants (4, 1, 6, 8), in particular another motor vehicle (1, 4) and/or a stationary communication participant (6, 8), **characterised in that** a predetermined transmission frequency (13) is used, via which the motor vehicle (1, 4) and/or the communication participant (4, 1, 6, 8) transmits a communication-participant-specific identification signal, in which at least one item of information is coded, (12, 14-17) cyclically between breaks in transmission (10), at least one identification signal (12, 14-17) being received by the motor vehicle (1, 4) and being evaluated, taking into account the item of information, in order to find suitable communication partners from the plurality of communication participants with regard to possible targeted communication (18) with the communication participant (4, 1, 6, 8) transmitting the identification signal (12, 14-17), targeted communication (18) with a communication participant (1, 4, 6, 8) taking place on a different frequency from the transmission frequency (13).

2. Method according to claim 1, **characterised in that** a break in transmission (10) is used which is longer than the transmission time (11) for the identification signal (12, 14-17).

3. Method according to either claim 1 or claim 2, **characterised in that** the kind of communication participant (1, 4, 6, 8) and/or a type of communication participant (1, 4, 6, 8) and/or an availability of the communication participant (1, 4, 6, 8) with respect to targeted communication and/or a status of the communication participant (1, 4, 6, 8) is coded into the identification signal (12, 14-17) as an item of information.

4. Method according to any of the preceding claims, **characterised in that** an extended targeted communication takes place with a communication participant (1, 4, 6, 8) identified as having the same manufacturer and/or the same type.

5. Method according to any of the preceding claims, **characterised in that** 10 to 30 metres, in particular 20 metres, is used as a transmission range for the identification signal (12, 14-17).

6. Motor vehicle (1, 4), comprising a communication device (2, 5) designed to carry out a method according to any of the preceding claims.

## Revendications

1. Procédé de communication sans fil entre un véhicule automobile (1, 4) et plusieurs autres participants à la communication (4, 1, 6, 8), en particulier un autre véhicule automobile (1, 4) et/ou un autre participant à la communication stationnaire (6, 8),
**caractérisé en ce que** :
l'on utilise une séquence d'envoi prédéterminée (13) via laquelle le véhicule automobile (1, 4) et/ou le participant à la communication (4, 1, 6, 8) envoie(nt) de manière cyclique entre des pauses d'envoi (10) un signal d'identification (12, 14-17) spécifique aux participants à la communication, dans lequel signal est codée au moins une information, dans lequel au moins un signal d'identification (12, 14-17) est reçu par le véhicule automobile (1, 4) et est évalué pour détecter des partenaires de communication appropriés entre les multiples participants à la communication concernant une communication éventuelle appropriée (18) avec le participant à la communication (4, 1, 6, 8) envoyant le signal d'identification (12, 14-17) en tenant compte de l'information, dans lequel une communication appropriée (18) avec un participant à la communication (1, 4, 6, 8) se fait à une fréquence différente de la fréquence d'envoi (13).

2. Procédé selon la revendication 1,
**caractérisé en ce que** :
l'on utilise une pause d'envoi (10) qui est plus longue que le temps d'envoi (11) pour le signal d'identification (12, 14-17).

3. Procédé selon la revendication 1 ou la revendication 2,
**caractérisé en ce que** :
on code dans le signal d'identification (12, 14-17) comme information le genre du participant à la communication (1, 4, 6, 8) et/ou un type du participant à la communication (1, 4, 6, 8) et/ou une accessibilité concernant une communication appropriée avec le participant à la communication (1, 4, 6, 8) et/ou un état du participant à la communication (1, 4, 6, 8).

4. Procédé selon l'une quelconque des revendications précédentes,
**caractérisé en ce que** :
il se fait une communication appropriée étendue avec un participant à la communication (1, 4, 6, 8) identifié comme le même fabricant et/ou présentant le même type.

5. Procédé selon l'une quelconque des revendications précédentes,
**caractérisé en ce que** :
l'on utilise comme portée d'envoi pour le signal d'identification (12, 14-17) 10 à 30 mètres, en particulier 20 mètres.

6. Véhicule automobile (1, 4) comprenant un dispositif de communication conçu pour réaliser un procédé selon l'une quelconque des revendications précédentes (2,5).
